# EUROPEAN PATENT SPECIFICATION

(11) **EP 3 251 443 B1**
(45) Date of publication and mention of the grant of the patent: **11.10.2023**
(21) Application number: 15880653.9
(22) Date of filing: 22.12.2015
(51) Int. Cl.: H04L 1/1812, H04W 28/18, H04L 1/1867, H04W 72/23

(54) **CARRIER AGGREGATION ENHANCEMENTS FOR UNLICENSED SPECTRUM AND 5G**
TRÄGERAGGREGATIONSERWEITERUNGEN FÜR UNLIZENZIERTES SPEKTRUM UND 5G
AMÉLIORATIONS APPORTÉES À L'AGRÉGATION DE PORTEUSES POUR UN SPECTRE SANS LICENCE ET LA 5G

(30) Priority: 29.01.2015 US 201562109168 P; 17.07.2015 US 201514802901
(43) Date of publication of application: 06.12.2017
(73) Proprietor: Apple Inc., Cupertino, CA 95014 (US)
(72) Inventor: ZHANG, Yujian, Beijing 100-081 (CN); HEO, Youn Hyoung, Santa Clara, CA 95054 (US); HE, Hong, Beijing 100190 (CN)
(74) Representative: Barnfather, Karl Jon
(86) International application number: PCT/US2015/067518
(87) International publication number: WO 2016/122814

(56) References cited:
- WO-A1-2014/182229
- GB-A- 2 477 649
- US-A1- 2006 229 102
- US-A1- 2008 268 840
- US-A1- 2010 069 021
- 'LTE; E-UTRA; RRC; Protocol specification (3GPP TS 36.331 version 12.3.0 Release 12' ETSI TS 136 331 V12.3.0 23 September 2014, XP050870050

## Description

### BACKGROUND

Wireless mobile communication technology uses various standards and protocols to transmit data between a base station and a wireless mobile device. In the third generation partnership project (3GPP) long term evolution (LTE) systems, the base station may be an evolved Node Bs (eNode Bs or eNBs) in a Universal Terrestrial Radio Access Network (UTRAN) or an evolved UTRAN (eUTRAN), which communicates with the wireless mobile device, e.g., a user equipment (UE). GB 2477649 A relates to multiplexing logical channels in a mixed licensed and unlicensed spectrum carrier aggregation. Downlink control signalling from a network to a user equipment UE associates at least a first logical channel or radio bearer with a first component carrier in a licensed frequency band and associates at least a second logical channel or radio bearer with a second component carrier in an unlicensed frequency band. The UE uses the associations to select which uplink data is sent on the first and second component carriers by multiplexing the uplink data on the at least first and the at least second logical channels or radio bearers. Delay sensitive data may be sent via the licensed frequency band. By example the downlink control signalling may be a MAC control element in RRC _Connection_Reconfiguration message which semi-statically defines a multiplexing allowance for each of the logical channels or radio bearers. An example MAC control element has an information tuple giving the association and multiplexing status per channcl/bcarcr. Certain embodiments also adapt transmit power scaling for licensed/unlicensed band operation.

### SUMMARY

The invention is set out in the appended set of claims. The object of the present application is solved by the independent claims. Advantageous embodiments are described by the dependent claims. Embodiments not falling under the scope of the claims should be understood as examples useful for understanding the invention.

### BRIEF DESCRIPTION OF THE DRAWINGS

The invention described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Fig. 1 schematically illustrates an example of a network comprising a UE and an eNB, in accordance with various embodiments.
Fig. 2 illustrates an electronic device circuitry according to an embodiment.
Fig. 3 illustrates an example of a layer structure in radio protocol.
Fig. 4 illustrates an example of a layer structure in radio protocol architecture.
Fig. 5 illustrates a flow chart of a method;
FIG. 6 illustrates a flow chart of a method in accordance with an embodiment;
FIG. 7 illustrates a flow chart of a method in accordance with an embodiment;
FIG. 8 illustrates a flow chart of a method;
FIG. 9 illustrates a flow chart of a method;
FIG. 10 illustrates a flow chart of a method;
FIG. 11 illustrates a flow chart of a method; and
FIG. 12 illustrates an example of a block diagram of a mobile communication device in accordance with an embodiment.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element.

References in the specification to "one embodiment", "an embodiment", "an example embodiment", etc., indicate that the embodiment described may comprise a particular feature, structure, or characteristic, but every embodiment may not necessarily comprise the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention may also be implemented as instructions stored on a machine-readable medium, which may be read and executed by one or more processors. A machine-readable medium may comprise any mechanism for storing or transmitting information in a form readable by a machine (e.g., a computing device). For example, a non-transitory machine-readable medium may comprise read only memory (ROM); random access memory (RAM); magnetic disk storage media; optical storage media; flash memory devices. For another example, a machine-readable medium may comprise electrical, optical, acoustical or other forms of propagated signals (e.g., carrier waves, infrared signals, digital signals, etc.), and others.

The following description may comprise terms, such as first, second, etc. that are used for descriptive purposes only and are not to be construed as limiting. As used herein, the term "module" may refer to, be part of, or comprise an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable component(s) that provide the described functionality.

Further, various operations will be described as multiple discrete operations, in turn, in a manner that is most helpful in understanding the illustrative embodiments; however, the order of description should not be construed as to imply that these operations are necessarily order dependent. In particular, these operations need not be performed in the order of presentation.

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter. The following definitions are provided for clarity of the overview and embodiments described below. In 3GPP radio access network (RAN) LTE systems, a transmission station may be a combination of Evolved universal terrestrial radio access network (E-UTRAN) Node Bs (or may be denoted as evolved Node Bs, enhanced Node Bs, eNodeBs, and/or eNBs), which may communicate with a wireless mobile device, known as a user equipment (UE).

Some embodiments may be used in conjunction with various devices and systems, for example, a user equipment (UE), a mobile device (MD), a wireless station (STA), a personal computer (PC), a desktop computer, a mobile computer, a laptop computer, a notebook computer, a tablet computer, a smart phone, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wireless node, a base station (BS), a wired or wireless router, a wired or wireless modem, a video device, an audio device, an audio-video (A/V) device, a wired or wireless network, a wireless area network, a cellular network, a cellular node, a cellular device, a wireless local area network (WLAN), a multiple input multiple output (MIMO) transceiver or device, a device having one or more internal antennas and/or external antennas, digital video broadcast (DVB) devices or systems, multi-standard radio devices or systems, a wired or wireless handheld device, e.g., a smartphone, a wireless application protocol (WAP) device, vending machines, sell terminals, or the like.

Some embodiments may be used in conjunction with one or more types of wireless communication signals and/or systems, for example, radio frequency (RF), frequency-division multiplexing (FDM), orthogonal FDM (OFDM), single carrier frequency division multiple access (SC-FDMA), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), bluetooth^{®}, global positioning system (GPS), wireless fidelity (Wi-Fi), Wi-Max, ZigBee^{™}, ultra-wideband (UWB), global system for mobile (GSM), second generation (2G), 2.5G, 3G, 3.5G, 4G, 4.5G, fifth generation (5G) mobile networks, 3GPP, long term evolution (LTE) cellular system, LTE advance cellular system, high-speed downlink packet access (HSDPA), high-speed uplink packet access (HSUPA), high-speed packet access (HSPA), HSPA+, single carrier radio transmission technology (1XRTT), evolution-data optimized (EV-DO), enhanced data rates for GSM evolution (EDGE), and the like. Other embodiments may be used in various other or future devices, systems and/or networks.

Some demonstrative embodiments are described herein with respect to a LTE network. However, other embodiments may be implemented in any other suitable cellular network or system, e.g., a GSM network, a 3G cellular network such as a Universal Mobile Telecommunications System (UMTS) cellular system, a 4G cellular network, a 4.5G network, a 5G cellular network, a WiMax cellular network, or the like or other future network.

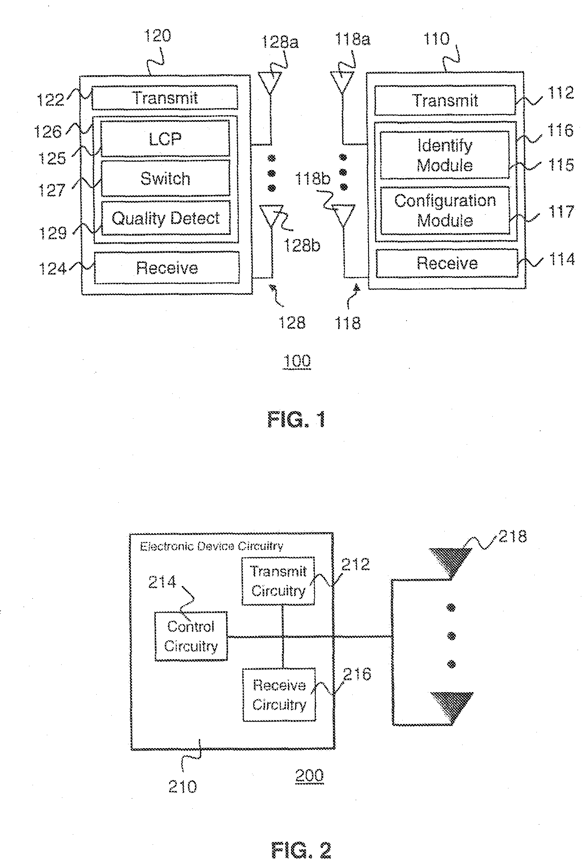

Fig. 1 schematically illustrates a wireless communication network 100 in accordance with various embodiments. The wireless communication network 100 (hereinafter "network 100") may be an access network of a 3GPP LTE network such as E-UTRAN, 3GPP LTE-A network, 4G network, 4.5G network, a 5G cellular network or other future communication network, a WiMax cellular network, HSPA, Bluetooth, WiFi or other type of wireless access networks. The network 100 may comprise one or more wireless communication devices capable of communicating content, data, information and/or signals via one or more wireless mediums, for example, a radio channel, a cellular channel, an RF channel, a wireless-local-area-network (WLAN) channel such as a WiFi channel, and/or the like. In some demonstrative embodiments, one or more elements of network 100 may optionally be capable of communicating over any suitable wired communication links. In some demonstrative examples, the network 100 may comprise a base station, e.g., an enhanced node base station (eNB) 110 that may wirelessly communicate with a mobile device or terminal, e.g., a user equipment (UE) 120. In some demonstrative examples, the eNB 110 may be comprised in a radio access network that may comprise one or more cellular nodes, e.g., an eNB, a Node B, a base station (BS), a base transceiver station (BTS), and/or the like.

In some demonstrative examples, UE 120 may be a subscriber station that may be configured to utilize radio resources across one or more carriers such as in a carrier aggregation scheme. In some examples, UE 120 may be configured to utilize carrier aggregation (CA), wherein one or more component carriers (CCs) may be aggregated for communication between eNB 110 and UE 120. For example, UE 120 may connect with a primary serving cell (PCell) of eNB 110 utilizing a primary CC. UE 120 may connect with one or more secondary serving cells (SCells) of eNB 110 utilizing one or more secondary CCs. In various examples, UE 120 may communicate in one or more wireless communication networks, including 3GPP LTE network, 3GPP LTE-U network, 3GPP LTE-A network, a 5G cellular network or other wireless networks such as a 4G network, a 4.5G network, a WiMax cellular network, WiMAX, HSPA, Bluetooth, WiFi, or the like.
In some demonstrative examples, eNB 110 and/or UE 120 may comprise an LTE system that may utilize a licensed spectrum assigned to a corresponding LTE service provider (or operator). The LTE system that is to operate in a licensed spectrum may be called as LTE in Licensed Spectrum or simply LTE. In response to an upsurge in demand for wireless broadband data, 3GPP Release 13 may transmit data through an unlicensed spectrum and/or a licensed spectrum to increase a data throughput of an LTE system. The LTE system that is to operate in an unlicensed spectrum may be called as LTE in Unlicensed Spectrum or LTE-U. A system that may integrate LTE and LTE-U using carrier aggregation (CA) technology may be called as Licensed-Assisted Access (LAA) using LTE, or simply LAA. In LAA, an LTE licensed carrier may be served as a primary cell or PCell and one or more LTE-U carriers may be served as secondary cell(s) or SCell(s).

A CC may support one or more communication channels according to a release of 3GPP LTE-advanced communication standard. For example, a CC may support one or more communication channels to carry information between UE 120 and eNB 110. A CC may include one or more uplink and downlink subframes to carry information between eNB 110 and UE 120. One or more radio bearers may be used to implement a quality of service (QoS) supporting in an air interface. In carrier aggregation, a radio bearer may be transmitted and/or received on one or more serving cells.

In some examples, radio environments on one or more serving cells may not be fundamentally different. In some examples, a radio environment on an unlicensed spectrum may be different from that on a licensed spectrum of an LTE system. In the radio environment on the unlicensed spectrum, an LTE operator such as eNB 110 may need to control various interference sources, e.g., other radio access technologies (RAT) such as WiFi or one or more LAA-capable eNBs/UEs of other operator(s), etc. In some examples, an unlicensed carrier may be switched off due to relatively strong interference. One or more unstable radio conditions in an unlicensed spectrum may impact QoS or other requirements of one or more bearers, e.g., latency/reliability requirement. Examples of the one or more bearers may comprise voice, real time gaming, or signaling radio bearer (SRB) and other bearers that may have latency and/or reliability requirements. In some other examples, for services such as a best-effort service, QoS may not be impacted using LAA.

In an example of a bearer carried over a radio link control (RLC) unacknowledged mode (UM), in response to an uplink (UL) grant in a serving cell, a UE, e.g., UE 120, may apply logical channel prioritization (LCP) to decide how to utilize the UL grant. Here, uplink is used as an example. In some examples, UE 120 may not distinguish from which carrier the UE receives the UL grant. In response to the UL grant, UE 120 may transmit on a licensed spectrum or an unlicensed spectrum data of a delay/reliability sensitive service, e.g., voice, real time gaming, or signaling radio bearer (SRB) or any other service with latency and/or reliability requirements. For example, if UE 120 transmits the data of the delay/reliability sensitive service in an unlicensed spectrum, latency/reliability requirement of the delay/reliability sensitive service may not be satisfied, e.g., due to one or more unstable radio conditions in unlicensed spectrum. One embodiment restricts that one or more bearers are to be transmitted/received to/from only a subset of serving cells in carrier aggregation to satisfy latency/reliability requirement(s) for the one or more bearers. The Fifth generation (5G) of mobile technology may enable a mobile and/or a connected environment and may empower socio-economic transformations. For example, one requirement of 5G may reduce latency, e.g., an end to end latency. In one example, carrier aggregation architecture may be used to utilize radio resource(s) of LTE and/or radio resource(s) of 5G RAT for a UE.

One example may restrict that a communication of a signaling radio bearer (SRB) and/or a data radio bearer with one or more QoS requirements may be only on a subset of serving cells or carriers of an eNB based on a service type of the communication, e.g., a LTE communication, a LTE-A communication, a 5G communication and/or other future RAT communication. For example, one example may restrict that the SRB and/or the data radio bearer to be transmitted and/or received from/to only a subset of serving cells or carriers based on a type of a service for the transmission and/or the reception. The restriction may be included or fixed in one or more wireless standard specifications, e.g., LTE specification, LTE-A specification, 5G specification and/or specifications of other wireless communication standards. For example, for a LAA, one example may map a delay/latency sensitive radio bearer (e.g., voice over internet protocol (VoIP) and/or real time gaming services, etc.) and/or a radio bearers that require relatively high reliability (e.g., SRB services, etc.) only on one or more licensed serving cells or carriers to satisfy one or more requirements such as latency or reliability requirement and/or other requirement. For example, in LAA, one example may transmit and/or receive a data radio bearer with QoS requirements and/or a SRB only in PCell or licensed carriers. In another example, for 5G, a radio bearer with one or more requirements such as latency/reliability and/other requirement may be mapped on only one or more 5G RAT serving cells or carriers to satisfy one or more of the requirements. For example, in the case of 5G, the one or more bearers may only be transmitted on 5G RAT carriers.

An embodiment configures radio resource control signaling. For example, for one or more legacy/reliability sensitive bearers where the restriction(s) are to be applied, the RRC signaling is configured to comprise configuration information associated with the one or more restrictions, comprising information element (IE) *ul-DataCellList.* For example, one embodiment may modify 3GPP specification, e.g., TS 36.331, to include the configuration information, *ul-DataCellList.* Table 1 shows an embodiment of the configuration information that may be added to the specification.

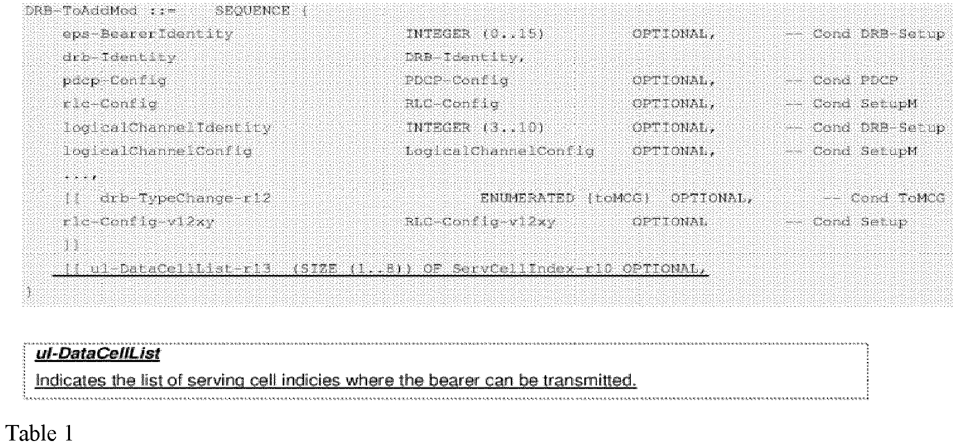

The IE *ul-DataCellList* lists one or more indices of the one or more serving cells on which the legacy/reliability sensitive bearers can be transmitted/received. While Table 1 illustrates an embodiment that uses *ul-DataCellList,* some examples may use other configuration information relating to the restriction(s) that delay/reliability sensitive bearers are to be transmitted/received only on a subset of serving cells or radio carriers. In some examples, *pdcp-Config* and/or *LogicalChannelConfig* and/or other RRC signaling may comprise the list of one or more indices of the one or more serving cells on which the legacy/reliability sensitive bearers can be transmitted/received.

Referring to Fig. 1, eNB 110 may comprise one or more of a processor module 116, a transmitter module 112, a receiver module 114 and one or more antennas 118. The eNB 110 may optionally comprise other hardware components and/or software components, e.g., a memory, a storage, an input module, an output module, one or more radio modules and/or one or more digital modules, and/or other components. Transmitter module 112 may be configured to transmit signals to UE 120 via one or more antennas 118. Receiver module 114 may be configured to receive signals from UE 120 via one or more antennas 118.

Processor module 116 may be coupled with transmitter module 112 and receiver module 114. In some examples, processor module 116 may control one or more functionalities of eNB 110 and/or control one or more communications performed by eNB 110. In some demonstrative examples, processor module 116 may execute instructions of software and/or firmware, e.g., of an operating system (OS) of eNB 110 and/or of one or more applications. Processor module 116 may comprise or may be implemented using suitable circuitry, e.g., controller circuitry, scheduler circuitry, processor circuitry, memory circuitry, and/or any other circuitry, which may be configured to perform at least part of the functionality of processor module 116. In some examples, one or more functionalities of processor module 116 may be implemented by logic, which may be executed by a machine and/or one or more processors.

In some demonstrative examples, processor module 116 may comprise an identifying module 115 and a configuration module 117. Identifying module 115 may be configured to identify or obtain configuration information for a radio bearer that a restriction may be applied. In embodiments, examples of the radio bearer that has the restriction may comprise, e.g., delay/reliability sensitive bearers such as voice, VoIP, real time gaming, or SRB and/or other bearers that may be delay/legacy sensitive and/or require higher reliability. The transmitter module 112 and the receiver module 114 are configured to transmit and/or receive the restricted radio bear to or from the subset of serving cells based on the configuration information, respectively. The transmitter module 112 may be configured to transmit the configuration information to UE 120. In embodiments, the configuration comprises information on the restriction that the radio bearer can be transmitted/received via only a subset of one or more serving cells of eNB 110. For example, the configuration information comprises an RRC signal, *ul-DataCellList,* that indicates a list of one or more serving cell indices for transmission/reception of the restricted radio bearer. In some examples, the configuration information may comprise other information relating to the restriction, e.g., a list of one or more licensed radio carrier indices on which the radio bearer can be transmitted/received and/or a list of one or more 5G RAT serving cell/carrier indices. The transmitter module 112 may be configured to transmit the configuration information to UE 120 via, e.g., RRC signaling.

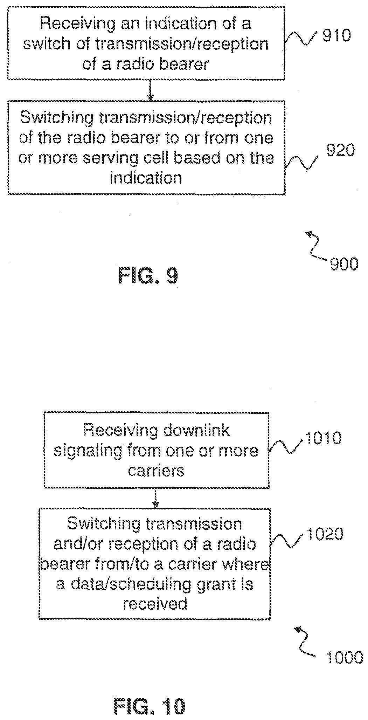

In some examples, configuration module 117 may be configured to configure UE's switching (e.g., 920 of Fig. 9) of transmission and/or reception of a radio bear to/from a subset of one or more serving cells of eNB 110. In some examples, configuration module 117 may be configured to configure the switching performed by UE 120 via RRC signaling. In some examples, configuration module 117 may be configured to configure the switching performed by UE 120 via MAC CE signaling.

For example, configuration module 117 may be configured to reconfigure media access control (MAC) carrier information and/or physical layer (PHY) carrier information for the radio bearer with the restriction, e.g., based on the configuration information such as the list of one or more serving cell indices on which the radio bearer can be transmitted/received or other configuration information relating to the restriction. The transmitter module 112 may be configured to transmit reconfigured MAC carrier information and/or PHY carrier information to UE 120 via RRC signaling. In some examples, eNB 110 may include, e.g., via the configuration module 117, the received MAC carrier information and/or PHY carrier information in the restricted radio bearer. Transmitter module 112 may be configured to transmit the MAC carrier information and/or the PHY carrier information to UE 120 via RRC signaling.

In some examples, configuration module 117 may be configured to configure UE 120's switching of transmission and/or reception of the radio bear to/from a subset of serving cells or radio carriers of eNB 110 via MAC CE signaling. Configuration module 117 may be configured to configure MAC information and/or PHY information for all serving cells of eNB 110. For example, configuration module 117 may configure MAC information and/or PHY information to indicate only the subset of serving cells that can be used for data transmission and/or reception, e.g., based on configuration information, e.g., *ul-DataCellList.* For example, the data transmission/reception may comprise transmission/reception of one or more delay/reliability sensitive radio bearers that a restriction may be applied. Transmission/reception of the delay/reliability sensitive radio bearers may be restricted to the subset of serving cells indicated by MAC information and/or PHY information. Transmitter module 112 may be configured to transmit the MAC information and/or PHY information to UE 120 via, e.g., RRC signaling and/or MAC control element (CE) signaling.

Referring to Fig. 1, in some demonstrative examples, UE 120 may comprise a processor module 126, a transmitter module 122, a receiver module 124 and one or more antennas 128. UE 120 may comprise other hardware components and/or software components, e.g., a memory, a storage, an input unit, an output unit and/or any other components. Transmitter module 122 may transmit signals to eNB 110 via one or more antennas 128. Receiver module 124 may receive signals from eNB 110 via one or more antennas 128.

In some examples, processor module 126 may be coupled to receiver module 124 and transmitter module 122. In some examples, processor module 126 may control one or more functionalities of UE 120 and/or control one or more communications performed by UE 120. In some demonstrative examples, processor module 126 may execute instructions of software and/or firmware, e.g., of an operating system (OS) of UE 120 and/or of one or more applications. Processor module 126 may comprise or may be implemented using suitable circuitry, e.g., controller circuitry, scheduler circuitry, processor circuitry, memory circuitry, and/or any other circuitry, which may be configured to perform at least part of the functionality of processor module 12. In some examples, one or more functionalities of processor module 126 may be implemented by logic, which may be executed by a machine and/or one or more processors.

In some examples, processor module 126 may comprise a central processing unit (CPU), a digital signal processor (DSP), a graphic processing unit (GPU), one or more processor cores, a single-core processor, a dual-core processor, a multiple-core processor, a microprocessor, a host processor, a controller, a plurality of processors or controllers, a chip, a microchip, one or more circuits, circuitry, a baseband circuitry, a radio frequency (RF) circuitry, a logic unit, an integrated circuit (IC), an application-specific IC (ASIC), or any other suitable multi-purpose or specific processor or controller and/or any combination thereof.

In some examples, processor module 126 may comprise a switching module 127 and a detecting module 129. Receiver module 124 may be configured to receive configuration information from eNB 110, e.g., via RRC signaling. The configuration information comprises configuration information on a restriction that a radio bearer is to be transmitted/received on only a subset of one or more serving cells of eNB 110. The configuration information comprises a RRC signal, *ul-DataCellList,* that indicates the list of the subset of serving cell indices where the restricted radio bearer can be transmitted/received.

Transmitter module 122 and receiver module 124 may be configured to transmit and/or receive the restricted radio bearer to or from eNB 110 based on the configuration information, respectively. In some examples, receiver module 124 may further be configured to receive RRC signaling and/or MAC CE signaling from eNB 110. Switching module 127 may be configured to switch transmission and/or reception of the radio bearer where the restriction applies to or from only the subset of one or more serving cells of eNB 110 based on the RRC signaling and/or the MAC CE signaling. The RRC signaling may comprise MAC carrier information and/or PHY carrier information that may comprise a list of one or more serving cell indices associated with the subset of serving cells for the restricted radio bearer. The MAC CE signaling may comprise MAC information and/or PHY information to indicate from all the serving cells the subset of serving cells of eNB 110 that can be used to transmit and/or receive the restricted radio bearer. Switching module 127 may be configured to switch transmission and/or reception of the restricted radio bearer to or from the subset of serving cells indicated by RRC signaling and/or MAC CE signaling received from eNB 110.

In some examples, receiver module 124 may be configured to receive downlink signaling, e.g., for a physical downlink control channel from all activate serving cells of eNB 110. Switching module 127 may be configured to switch transmission and/or reception of the radio bearer where the restriction applies to or from a serving cell, from which the data or scheduling grant is received first via the receiver module 124.

In some examples, radio link quality detecting module 129 may be configured to detect or check a radio link quality of one or more serving cells or component carriers of eNB 110. Switching module 127 may be configured to switch transmission and/or reception of the radio bearer where the restriction applies to or from a serving cell based on the detected radio link quality.

Transmitter module 112 may comprise, or may be coupled with one or more antennas 118 of eNB 110 to communicate wirelessly with other components of the wireless communication network 100, e.g., UE 120. Transmitter module 122 may comprise, or may be coupled with one or more antennas 128 of UE 120 to communicate wirelessly with other components of the wireless communication network 100, e.g., eNB 110. In some examples, transmitter module 112 and/or transmitter module 122 may each comprise one or more transmitters, one or more receivers, one or more transmitter modules, one or more receiver modules and/or one or more transceivers that may be able to send and/or receive wireless communication signals, radio frequency (RF) signals, frames, blocks, transmission streams, packets, messages, data items, data, information and/or any other signals.

In some demonstrative examples, transmitter module 122 may support a WLAN communication for UE 120. For example, transmitter module 122 may perform functionality of one or more stations, e.g., WiFi stations, WLAN stations, and/or millimeter Wave (mmWave) stations or the like.

In some demonstrative examples, the antennas 118 and/or the antennas 128 may comprise any type of antennas suitable to transmit and/or receive wireless communication signals, RF signals, blocks, frames, transmission streams, packets, messages, data items and/or data. For example, the antennas 118 and/or the antennas 128 may comprise any suitable configuration, structure and/or arrangement of one or more antenna elements, components, units, assemblies and/or arrays. In some examples, the antennas 118 and/or the antennas 128 may implement transmit and/or receive functionalities using separate transmit and/or receive antenna elements. In some examples, the antennas 118 and/or the antennas 128 may implement transmit and/or receive functionalities using common and/or integrated transmit/receive elements. The antenna may comprise, for example, a phased array antenna, a single element antenna, a dipole antenna, a set of switched beam antennas, and/or the like. In some demonstrative examples, UE 120 may comprise two antennas, e.g., antennas 128a and 128b, or any other number of antennas, e.g., one or more than two antennas. In some demonstrative examples, eNB 110 may comprise two antennas, e.g., antennas 118a and 118b, or any other number of antennas, e.g., one or more than two antennas.

While Fig. 1 illustrates some components of eNB 110, in some examples, the eNB 110 may optionally comprise other suitable hardware, software and/or firmware components that may be interconnected or operably associated with one or more components in the eNB 110. While Fig. 1 illustrates some components of UE 120, in some examples, UE 120 may optionally comprise other suitable hardware, software and/or firmware components that may be interconnected or operably associated with one or more components in UE 120. For example, eNB 110 and/or UE 120 may comprise one or more radio modules (not shown) to modulate and/or demodulate signals transmitted or received on an air interface, and one or more digital modules (not shown) to process signals transmitted and received on the air interface.

In some demonstrative examples, eNB 110 and/or UE 120 may comprise one or more input units (not shown) and/or one or more output units (not shown). For example, one or more input units may comprise a keyboard, a keypad, a mouse, a touch-screen, a touch-pad, a track-ball, a stylus, a microphone, or any other pointing/input unit or device. For example, one or more output units may comprise a monitor, a screen, a touch-screen, a flat panel display, a Cathode Ray Tube (CRT) display unit, a Liquid Crystal Display (LCD) display unit, a plasma display unit, one or more audio speakers or earphones, or any other output unit or device.

In some demonstrative examples, UE 120 may comprise, for example, a mobile computer, a mobile device, a station, a laptop computing device, a notebook computing device, a netbook, a tablet computing device, an ultrabook computing device, a handheld computing device, a handheld device, a storage device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a mobile phone, a cellular telephone, a PCS device, a mobile or portable GPS device, a DVB device, a wearable device a relatively small computing device, a non-desktop computer, a "carry small live large" (CSLL) device, an ultra mobile device (UMD), an ultra mobile PC (UMPC), a mobile internet device (MID), an "Origami" device or computing device, a video device, an audio device, an audio/video (A/V) device, a gaming device, a media player, a smartphone, a mobile station (MS), a mobile wireless device, a mobile communication device, a handset, a cellular phone, a mobile phone, a personal computer (PC), a handheld mobile device, an universal integrated circuit card (UICC), a customer premise equipment (CPE), or other consumer electronics such as digital cameras and the like, personal computing accessories and existing and future arising wireless mobile devices which may be related in nature and to which the principles of the embodiments could be suitably applied.

Fig. 2 illustrates an electronic device circuitry 200 according to an example. The electronic device circuitry 200 may be eNB circuitry, UE circuitry, or other type of circuitry in accordance with various examples. For example, the electronic device circuitry 200 may communicate using one or more wireless communication standards such as 3GPP LTE, 3GPP LTE-A, 3GPP LTE-U, WiMAX, HSPA, Bluetooth, WiFi, 5G standards or other wireless standards in various embodiments. The electronic device circuitry 200 may communicate in a wireless local area network (WLAN), a wireless personal area network (WPAN), and/or a wireless wide area network (WWAN) or other network in various examples.

In various examples, the electronic device circuitry 200 may be, or may be incorporated into or otherwise a part of, an eNB, a UE, or other type of electronic device. The electronic device circuitry 200 comprises radio transmit circuitry 212 and receive circuitry 216 which may be coupled to control circuitry 214. In some examples, the transmit circuitry 212 and/or receive circuitry 216 may be elements or modules of a transceiver circuitry. The electronic device circuitry 200 may be coupled with one or more plurality of antenna elements of one or more antennas 218. The electronic device circuitry 200 and/or the components of the electronic device circuitry 200 may be configured to perform operations similar to those described herein.

In some demonstrative examples, the electronic device circuitry 200 may be part of or comprise an application specific integrated circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some examples, the electronic device circuitry 200 may be implemented in, or functions associated with the circuitry may be implemented by, one or more software or firmware modules.

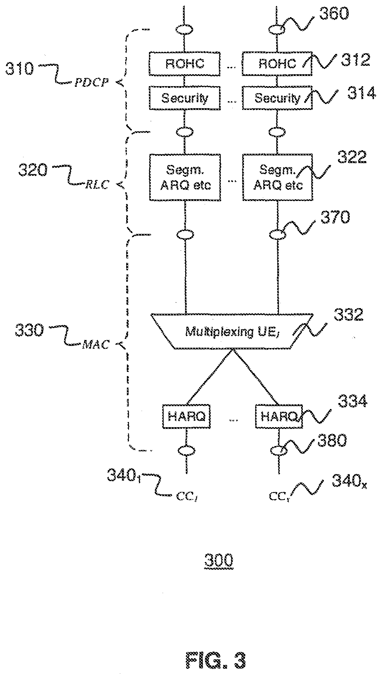

Fig. 3 illustrates an example of a layer structure in radio protocol architecture 300, e.g., of an E-UTRAN. In some demonstrative examples, the layer structure 300 may comprise one or more radio protocol sublayers, e.g., a medium access control (MAC) sublayer 330, a radio link control (RLC) sublayer 320 and a packet data convergence protocol (PDCP) sublayer 310. In some demonstrative examples, the MAC sublayer 330, RLC sublayer 320 and the PDCP sublayer 310 may correspond to Layer 2 sublayers.

In some demonstrative examples, the MAC sublayer 330 may perform one or more services and/or functions, e.g., hybrid automatic report request (HARQ) (334). In some demonstrative examples, the MAC sublayer 330 may perform multiplexing (332) of one or more logical channels 370 (e.g., radio bearers 360) on the same transport channel 380 (e.g., transport block). In some other examples, the MAC sublayer 330 may further perform demultiplexing of MAC service data units belonging to one or more logical channels 370 from transport blocks delivered from a physical (PHY) layer (not shown) on one or more transport channels 380. In some other examples, the MAC sublayer 330 may perform mapping (not shown) between logical channels 370 and transport channel 380.

In some demonstrative examples, RLC sublayer 320 may perform one or more services and/or functions, e.g., segmentation of RLC service data units and/or automatic repeat request (ARQ) (322). The PDCP sublayer 310 may perform one or more services and/or functions, e.g., robust header compression (ROHC) (312) and/or security functions (314). While Fig. 3 illustrates MAC layer 330, RLC layer 320 and DPCP layer 310 may perform some services and/or functions, some examples may comprise one or more other services or functions.

Referring to Fig. 3, in some demonstrative examples, in carrier aggregation (CA), two or more component carriers (CCs) may be aggregated to support a wider transmission bandwidth. In one example, a CC may correspond to a serving cell. For example, UE 120 may be configured to simultaneously receive or transmit on one or more of the CCs. In some examples, the number of downlink CCs that can be configured may depend on downlink aggregation capability of UE 120 and the number of uplink CCs that can be configured may depend on uplink aggregation capability of UE 120.

Fig. 3 illustrates an example of a bearer mapping in carrier aggregation. In some demonstrative examples, a radio bearer, e.g., 360, may be mapped to one or more of all serving cells, e.g., PCell(s) and SCell(s) or the set of CCs 340₁ to 340x, wherein X may represent a number of CCs in the transmission bandwidth. In embodiments, for one or more legacy sensitive and/or reliability sensitive bearers, UE 120 may be configured to restrict the one or more legacy sensitive and/or reliability sensitive bearers be transmitted/received only on one or more PCell(s) and/or licensed CCs corresponding to the PCell(s). The one or more bearers comprise SRB, VoIP, real time gaming or any other bearer that has legacy and/or reliability requirement(s). In some other demonstrative examples, for 5G, UE 120 may be configured to transmit/receive the one or more legacy sensitive and/or reliability sensitive bearers in 5G RAT only.

In embodiments, logical channel prioritization (LCP) procedure in MAC layer 330 may be modified to implement the one or more restriction in radio protocol. In one example, in response to performing LCP, e.g., by the LCP module 125, UE 120 may only transmit data associated with a bearer to one or more serving cells based on RRC configuration, e.g., of RRC signaling. For example, in response to receiving an uplink grant from a serving cell, if the restriction related information, e.g., the *ul-DataCellList* field, is signaled for a logical channel, UE 120 may determine, by LCP module 125, if the serving cell transmitting the uplink grant is in the *ul-DataCellList.* In response to determining that the serving cell transmitting the uplink grant is not in the *ul-DataCellList*, UE 120 may not consider the logical channel during LCP procedure. Contrarily, in response to determining that the serving cell that transmits the uplink grant is in the *ul-DataCellList*, UE 120 may transmit the bearer via the serving cell. In some demonstrative examples, the eNB 110 may transmit the restriction related information to UE 120, e.g., via RRC signaling.

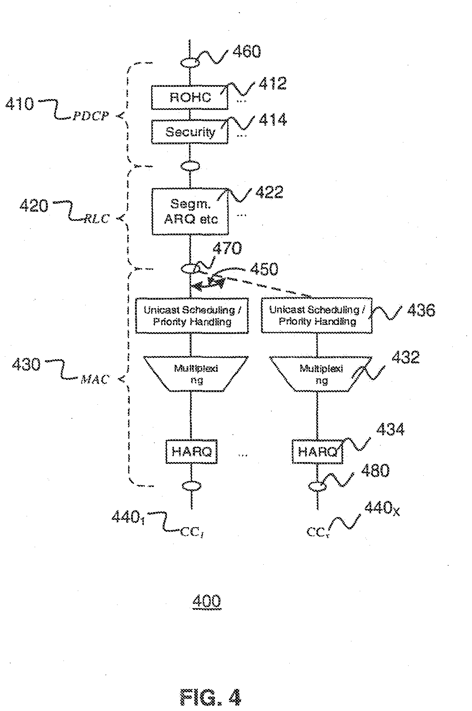

Fig. 4 illustrates an example of a layer structure 400 of radio protocol architecture with carrier aggregation. Fig. 4 illustrates an example of a switch 450, e.g., among a set of one or more component carriers (CCs) 440₁ to 440x, wherein X may represent a number of CCs in a transmission bandwidth.

In some demonstrative examples, an eNB, e.g., 110, may configure the switch 450 via RRC signaling. For example, eNB 110 may reconfigure MAC/PHY carrier information for a radio bearer. For a legacy/reliability sensitive bearer where a restriction applies, eNB 110 may configure the MAC sublayer carrier information and/or the physical layer carrier information to restrict transmission/reception of the legacy/reliability sensitive bearer only on a subset of one or more serving cells or CCs. The eNB 110 may configure the MAC sublayer carrier information and/or the physical layer carrier information to comprise indices of the subset of one or more serving cells based on, e.g., *ul-DataCellList,* and other configuration information relating to the restriction. In some examples, eNB 110 may transmit the MAC sublayer carrier information and/or the physical layer (PHY) carrier information to UE 120, e.g., via RRC signaling. The legacy/reliability sensitive bearer may comprise the list of serving cell indices. UE 120 may switch transmission/reception of the legacy/reliability sensitive bearer to the subset of one or more serving cells or CCs based on the received MAC sublayer carrier information and/or PHY carrier information.

As shown in Fig. 4, RLC sublayer 420 and/or PDCP sublayer 410 are still in eNB 110 in the example of MAC carrier information and/or the PHY carrier information. In some demonstrative examples, eNB 110 may not re-establish RLC sublayer 420 and/or PDCP 410 with the carrier switching. The MAC sublayer 430 may perform one or more functions or services, e.g., unicast scheduling and/or priority handling (436), multiplexing and/or de-multiplexing, e.g., MAC service data units (432) and/or HARQ (434).

In some other demonstrative examples, eNB 110 may configure the switch 450 via MAC CE signaling. For example, eNB 110 may configure MAC information and/or PHY information for all serving cells. In some examples, eNB 110 may configure the MAC information and/or PHY information to indicate if a corresponding serving cell can be used for data transmission and/or reception. For example, the MAC information and/or PHY information may be configured to indicate if a corresponding serving cell is to be used for transmission/reception of a legacy/reliability sensitive bearer. UE 120 may use the one or more serving cells indicated by the MAC information and/or the PHY information for data transmission and/or reception. In some examples, UE 120 may switch transmission and/or reception of the legacy/reliability sensitive bearer based on the MAC information and/or the PHY information received from eNB 110 via, e.g., MAC CE signaling. For example, UE 120 may switch to only one or more serving cells indicated by the MAC information and/or the PHY information to transmit/receive a legacy/reliability sensitive bearer to/from the serving cell.

In some demonstrative examples, RLC sublayer 420 may have different RLC values (e.g., RLC reorder timer) depending on respective serving cells or carriers indicated by the MAC information and/or the PHY information such as licensed carriers, unlicensed carriers, LTE carriers or 5G RAT carriers, etc. In some examples, PDCP sublayer 410 may have different PDCP values depending on corresponding serving cells indicated by the MAC information and/or the PHY information such as licensed carriers, unlicensed carriers, LTE carriers or 5G RAT carriers, etc. One example may apply an RLC value and/or a PDCP value automatically based on an actual serving cell that is used for data transmission/reception.

In some other demonstrative examples, UE 120 may perform the switching 450 implicitly based on data reception by UE 120. For example, UE 120 may receive downlink signaling for a physical downlink control channel (PDCCH) on all activated serving cells of eNB 110. UE 120 may perform a carrier switching based on data/scheduling grant that UE 120 receives first. For example, in response to receiving a downlink/uplink scheduling grant from a 5G RAT serving cell or carrier first, UE 120 may map a radio bearer corresponding to the downlink/uplink scheduling grant to the 5G RAT carrier or serving cell. In some demonstrative examples, a RLC value may be automatically applied based on the actual serving cell that is used to transmit and/or receive a radio bear. For example, RLC value (e.g., RLC reorder timer) may depend on whether the actual serving cell is a licensed carrier, an unlicensed carrier, an LTE carrier or a 5G RAT carrier. In another example, a PDCP value may depend on the actual serving cell, e.g., a licensed carrier, an unlicensed carrier, an LTE carrier, or a 5G RAT carrier.

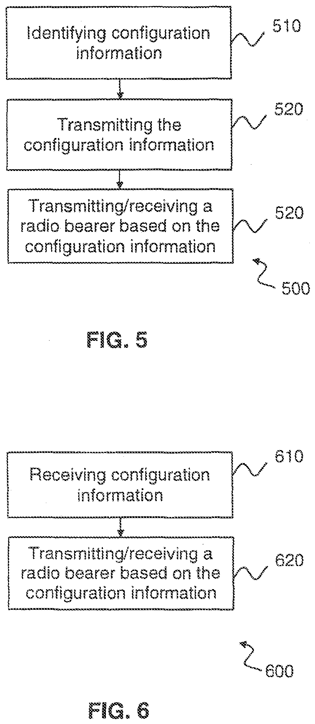

In some other demonstrative examples, UE 120 may perform a carrier switching 450 based on a radio link quality. For example, UE 120 may detect a radio link quality of a carrier that is to be used to transmit and/or receive a radio bearer. In response to detecting a radio link problem (e.g., a radio link failure) on the carrier, e.g., an unlicensed carrier or a 5G RAT carrier, UE 120 may switch to an LTE licensed carrier or an LTE carrier for the transmitting and/or receiving of the radio bearer. In some other examples, in response to detecting a radio link failure on a carrier or serving cell that is to be used to transmit and/or receive a legacy/reliability sensitive radio bear, UE 120 may switch to a serving cell that may have an improved radio link quality, e.g., an LTE licensed carrier or an LTE carrier of eNB 110, e.g., in the subset of serving cells or carriers for the restricted radio bearers. Fig. 5 illustrates an example of a method 500. In some examples, the method 500 may be performed by eNB 110, e.g., processor module 116, and/or electronic device circuitry 200, e.g., control circuitry 214. In embodiments, eNB 110 is configured with carrier aggregation in a long term evolution (LTE), LTE-advanced (LTE-A), and/or 5G RAT. Referring to Fig. 5, eNB 110 identifies or obtains configuration information for a radio bearer that a restriction may apply (510). Examples of the radio bearer that the restriction applies may comprise delay/reliability sensitive bearers, e.g., VoIP, SRB, real time gaming and/or other bearers that may require higher reliability. The configuration information comprises information on the restriction that UE 120 is to transmit and/or receive a radio bearer via only a subset of one or more serving cells of a wireless network. In embodiments, the configuration information comprises an information element, *ul-DatacellList*, that lists the subset of serving cell indicies where the radio bearer can be transmitted. The eNB 110 may transmit the configuration information to UE 120 (520) via, e.g., RRC signaling. In embodiments, eNB 110 transmits and/or receives the radio bearer to/from one or more serving cells in the subset based on the configuration information.

Fig. 6 illustrates an example of a method 600 according to an embodiment. In some examples, the method 600 may be performed by UE 120, e.g., processor modules 126, and/or electronic device circuitry 200, e.g., control circuitry 214. In embodiments, UE 120 is configured with carrier aggregation in a long term evolution (LTE), LTE-advanced (LTE-A), and/or 5G RAT or other future RAT. Referring to Fig. 6, UE 120 receives from eNB 110 configuration information for a radio bearer that a restriction may apply (610). UE 120 may receive the configuration information from eNB 110. Examples of the radio bearer that the restriction applies may comprise delay/reliability sensitive bearers, e.g., VoIP, SRB, real time gaming and/or any other bearers that may require higher reliability. The configuration information comprises restriction information, *ul-DatacellList* that indicates the list of serving cell indicies where the radio bearer can be transmitted. UE 120 may receive the configuration information via, e.g., RRC signaling. UE 120 transmits and/or receives the radio bearer to/from one or more serving cells in the subset based on the configuration information (block 620).

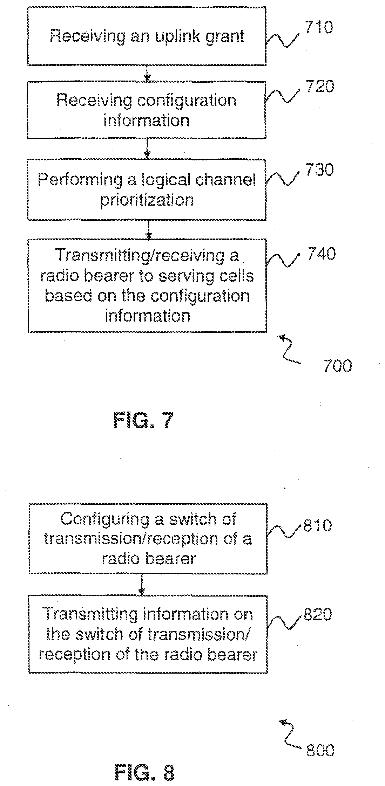

Fig. 7 illustrates an example of a method 700 according to an embodiment. In some demonstrative examples, the method 700 may be used by UE 120, e.g., processor module 126, and/or electronic device circuitry 200, e.g., control circuitry 214. Referring to Fig. 7, UE 120 may receive an uplink grant from a serving cell of eNB 110 (710). UE 120 receives from eNB 110 configuration information for a logical channel associated with the serving cell (720). In embodiments, the configuration information comprises information on a restriction that a radio bearer is to be transmitted and/or received only on a subset of one or more serving cells. The restriction information comprises a list of one or more serving cell indices where a radio bearer can be transmitted/received. UE 120 may receive the restriction information, e.g., *ul-DataCellList,* via RRC signaling. Examples of the radio bearer that the restriction applies may comprise delay/reliability sensitive bearers, e.g., VoIP, SRB, real time gaming and/or other bearers that may be legacy sensitive or require higher reliability.

Referring to Fig. 7, UE 120 performs a logical channel prioritization (LCP) based on the configuration information (730). For example, UE 120 may perform the restriction based on the configuration information in response to performing the logical channel prioritization. For example, UE 120 may determine if the serving cell that transmits the uplink grant is in the list of serving cells indices in the restriction information, e.g., *ul-DataCellList.* UE 120 may not consider the logical channel associated with the serving cell in the LCP procedure in response to determining that the serving cell is not in *ul-DataCellList.* On the contrary, in response to determining that the serving cell is in *ul-DataCellList,* UE 120 may prioritize the logical channel and/or may transmit and/or receive the radio bearer to/from the serving cell and/or one or more other serving cells in the *ul-DataCellList* based on the configuration information (740).

Fig. 8 illustrates an example of a method 800. In some demonstrative examples, method 800 may be performed by eNB 110, e.g., processor module 116, and/or electronic device circuitry 200, e.g., control circuitry 214. Referring to Fig. 8, eNB 110 may configure a switch, e.g., by UE 120, of transmission/reception of a radio bearer to or from a subset of one or more serving cells of eNB 110 (810). Examples of the radio bearer may comprise delay/reliability sensitive bearers, e.g., VoIP, SRB, real time gaming and/or other bearers that may be legacy sensitive or require higher reliability. In some demonstrative examples, eNB 110 may configure the switch of the transmission/reception of the radio bearer to a subset of one or more serving cells via RRC signaling and/or MAC CE signaling (810). The eNB 110 may transmit to UE 120 information on the switch of the transmission/reception of the radio bearer via RRC signaling and/or MAC CE signaling (820).

Referring to Fig. 8, in some demonstrative examples, eNB 110 may reconfigure carrier information of a MAC sublayer and/or a PHY layer for the radio bearer. The MAC/PHY carrier information may indicate one or more carriers or serving cells that can be used to transmit and/or receive the radio bearer. For example, eNB 110 may indicate in the MAC/PHY carrier information a list of serving cell indices that can be used to transmit/receive the radio bearer. The list of serving cell indices may be included in the radio bearer. The eNB 110 may transmit to UE 120 the MAC/PHY carrier information via RRC signaling (820). Referring to Figs. 4 and 8, RLC sublayer 420 and/or PDCP layer 410 may still be in the same eNB 110 in response to the reconfiguration of the MAC/PHY carrier information. The eNB 110 may not re-establish a RLC sublayer and/or a PDCP layer with the switch.

Referring to Fig. 8, in some other demonstrative examples, eNB 110 may configure MAC/PHY information for all serving cells of eNB 110. For example, eNB 110 may indicate in the MAC/PHY information a list of serving cell indices that can be used to transmit delay/reliability sensitive radio bearer. The eNB 110 may transmit to UE 120 the MAC/PHY information via MAC CE signaling (820). Referring to Figs. 4 and 8, RLC sublayer 420 may have one or more different RLC values (e.g., RLC reorder timer) depending on a serving cell or carrier, e.g., licensed carriers, unlicensed carriers, LTE carriers or 5G RAT carriers, etc., that may be used to transmit and/or receive a radio bearer. In some other examples, PDCP layer 410 may have one or more different PDCP values depending on respective serving cell or carrier that is used, e.g., licensed carriers, unlicensed carriers, LTE carriers or 5G RAT carriers, etc. In some demonstrative examples, an RLC value and/or a PDCP value may be applied automatically based on the actual serving cell that is used for data transmission/reception.

Fig. 9 illustrates an example of a method 900. In some demonstrative examples, method 900 may be performed by UE 120, e.g., processor module 126, and/or electronic device circuitry 200, e.g., control circuitry 214. Referring to Fig. 9, in some demonstrative examples, UE 120 may receive from eNB 110 information on a switch of transmission/reception of a radio bearer to or from a subset of one or more serving cells of eNB 110 (910). Examples of the radio bearer may comprise delay/reliability sensitive bearers, e.g., VoIP, SRB, real time gaming and/or other bearers that may be legacy sensitive or require higher reliability.

In some examples, UE 120 may receive the indication that may comprise MAC/PHY carrier information via, e.g., RRC signaling. The MAC/PHY carrier information may comprise a list of serving cell indices that can be used to transmit/receive the radio bearer. In some other examples, UE 120 may receive the indication that may comprise MAC/PHY information via, e.g., MAC CE signaling. The MAC/PHY information may comprise a list of serving cell indices that can be used to transmit/receive the radio bearer. For example, UE 120 may use the one or more serving cells indicated by the RRC signaling and/or MAC CE signaling to transmit/receive delay/reliability sensitive radio bearers.

Referring to Fig. 9, in response to receiving the indication on the switch, UE 120 may switch the transmission and/or reception of the radio bearer based on the information (920). For example, UE 120 may switch the transmission and/or reception of the radio bearer to or from a subset of one or more serving cells indicated by the MAC/PHY carrier information. In another example, UE 120 may switch the transmission and/or reception of the radio bearer to or from a subset of one or more serving cells indicated by the MAC/PHY information.

Fig. 10 illustrates an example of a method 1000. In some demonstrative examples, method 1000 may be performed by UE 120, e.g., processor module 126, and/or electronic device circuitry 200, e.g., control circuitry 214. Referring to Fig. 10, UE 120 may receive from eNB 110 downlink signaling, e.g., one or more data/scheduling grants, for a physical downlink control channel (PDCCH) on one or more activated serving cells or carriers (1010). Based on from which serving cell data/scheduling grant is received first, UE 120 may implicitly perform a switch of transmission and/or reception of a radio bearer to that serving cell. For example, if the data/scheduling grant, e.g., a downlink/uplink scheduling grant, that UE 120 receives first is from a 5G RAT carrier or a 5G RAT serving cell, UE 120 may map transmission and/or reception of a radio bearer that a restriction applies to the 5G RAT carrier or serving cell. In another example, if the data/scheduling grant that UE 120 receives first is from a licensed serving cell or carrier, UE 120 may switch transmission and/or reception of the restricted radio bearer to/from the licensed serving cell or carrier.

Referring to Figs. 4 and 10, RLC sublayer 420 may have one or more different RLC values (e.g., RLC reorder timer) depending on a serving cell or carrier, e.g., licensed carriers, unlicensed carriers, LTE carriers or 5G RAT carriers, etc., that may be used to transmit and/or receive a radio bearer. In some other examples, PDCP layer 410 may have one or more different PDCP values depending on respective serving cell or carrier that is used, e.g., licensed carriers, unlicensed carriers, LTE carriers or 5G RAT carriers, etc. In some demonstrative examples, an RLC value and/or a PDCP value may be applied automatically based on the actual serving cell that is used for the data transmission/reception.

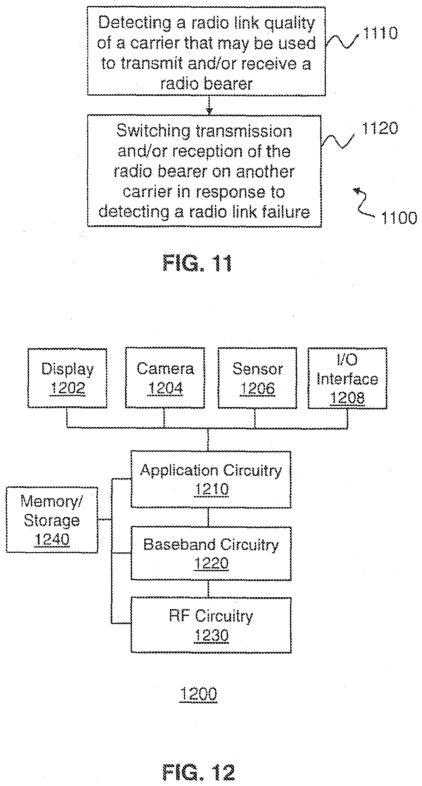

Fig. 11 illustrates an example of a method 1100. In some examples, the method may be performed by UE 120, e.g., processor module 126, and/or electronic device circuitry 200, e.g., control circuitry 214. Referring to Fig. 11, UE 120 may detect radio link quality of a serving cell or carrier that may be used to transmit and/or receive a radio bearer that a restriction may apply (1110). Examples of the radio bearer may comprise voice, real time gaming, or signaling radio bearer (SRB) and other bearers that may have latency and/or reliability requirements. In some demonstrative examples, UE 120 may detect the radio link quality of an unlicensed carrier and/or a 5G RAT carrier.

In response to detecting a radio link failure of the unlicensed carrier and/or the 5 G RAT carrier, UE 120 may perform a switch of transmission and/or reception of the radio bearer to a serving cell or carrier that may have a better radio link quality (1120). UE 120 may implicitly perform the switch based on a radio link quality of a serving cell or carrier that may be used to transmit and/or receive the radio bearer. For example, UE 120 may switch transmission and/or reception of the radio bearer to a licensed serving cell or carrier or an LTE carrier. In some demonstrative examples, an RLC value and/or a PDCP value may be applied automatically based on the actual serving cell that is used for the data transmission/reception.

Embodiments described herein may be implemented into a system that may use any suitably configured hardware, software and/or firmware. In some demonstrative examples, Fig. 12 illustrates an example system 1200 that may comprise a radio frequency (RF) circuitry 1230, a baseband circuitry 1220, an application circuitry 1210, memory/storage 1240, a display 1202, a camera 1204, a sensor 1206, and an input/output (I/O) interface 1208 that may be coupled with each other at least as shown in Fig. 12.

The application circuitry 1210 may comprise circuitry such as, but not limited to, one or more single-core or multi-core processors. The processor(s) may comprise any combination of general-purpose processors and/or dedicated processors (e.g., graphics processors, application processors, etc.). The processors may be coupled with one or more memory and/or one or more storage, e.g., 1240 and may execute one or more instructions stored in the memory/storage 1240 to enable various applications and/or operating systems running on the system 1200.

The baseband circuitry 1220 may comprise circuitry such as, but not limited to, one or more single-core or multi-core processors. The processor(s) may comprise a baseband processor. The baseband circuitry 1220 may handle one or more radio control functions that may enable communication with one or more radio networks, e.g., via RF circuitry 1230. The one or more radio control functions may comprise, but are not limited to, signal modulation, encoding, decoding, radio frequency shifting, etc. In some examples, the baseband circuitry 1220 may provide for communication compatible with one or more radio technologies. For example, in some examples, the baseband circuitry 1220 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 1220 may be configured to support radio communications of more than one wireless protocol and may be referred to as multi-mode baseband circuitry.

In various examples, baseband circuitry 1220 may comprise circuitry to operate with signals that may not be limited to be in a baseband frequency. For example, in some examples, baseband circuitry 1220 may comprise circuitry to operate with signals having an intermediate frequency that may be between a baseband frequency and a radio frequency.

RF circuitry 1230 may enable communication with wireless networks, e.g., using modulated electromagnetic radiation through a non-solid medium. In some demonstrative examples, the RF circuitry 1230 may comprise switches, filters, amplifiers, etc. to facilitate the communication with the wireless network. In some demonstrative examples, RF circuitry 1230 may comprise circuitry to operate with signals that may not be limited to a radio frequency. For example, in some embodiments, RF circuitry 1230 may comprise circuitry to operate with signals having an intermediate frequency, which is between a baseband frequency and a radio frequency.

In various examples, transmit circuitry, control circuitry, and/or receive circuitry discussed or described herein may be embodied in whole or in part in one or more of the RF circuitry 1230, the baseband circuitry 1220, and/or the application circuitry 1210. As used herein, the term "circuitry" may refer to, be part of, or comprise an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some examples, the electronic device circuitry may be implemented in, or functions associated with the circuitry may be implemented by, one or more software or firmware modules.

In some examples, some or all of the constituent components of the baseband circuitry 1220, the application circuitry 1210, and/or memory and/or storage 1240 may be implemented together on a system on a chip (SOC).

Memory/storage 1240 may be used to load and store, e.g., data, information, and/or instruction, or the like. Memory/storage 1240 for one example may comprise any combination of suitable volatile memory (e.g., dynamic random access memory (DRAM)) and/or non-volatile memory (e.g., Flash memory). Examples of memory may comprise a random access memory (RAM), a read only memory (ROM), a dynamic RAM (DRAM), a synchronous DRAM (SD-RAM), a flash memory, a volatile memory, a non-volatile memory, a cache memory, a buffer, a short term memory unit, a long term memory unit, or other suitable memory units. Examples of storage may comprise a hard disk drive, a floppy disk drive, a Compact Disk (CD) drive, a CD-ROM drive, a DVD drive, or other suitable removable or non-removable storage units.

In various examples, I/O interface 1208 may comprise one or more user interfaces that may enable user interaction with the system and/or one or more peripheral component interfaces that may enable peripheral component interaction with the system. Examples of user interfaces may comprise, but are not limited to, a physical keyboard or keypad, a touchpad, a speaker, a microphone, etc. Examples of peripheral component interfaces may comprise, but are not limited to, a non-volatile memory port, a universal serial bus (USB) port, an audio jack, and a power supply interface.

In various examples, sensor 1206 may comprise one or more sensing devices that may determine environmental conditions and/or location information related to the system.

In some examples, examples of the sensors may comprise, but are not limited to, a gyro sensor, an accelerometer, a proximity sensor, an ambient light sensor, and a positioning unit or other sensing device. The positioning unit may also be part of, or interact with, the baseband circuitry and/or RF circuitry to communicate with components of a positioning network, e.g., a global positioning system (GPS) satellite.

In various examples, examples of the display 1202 may comprise a display, e.g., a liquid crystal display, a touch screen display, etc.

In various examples, the system may comprise a mobile computing device such as, but not limited to, a laptop computing device, a tablet computing device, a netbook, an ultrabook, a smartphone, etc. In various embodiments, system may have more or less components, and/or different architectures.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executable code of an identified module need not be physically located together, but may comprise disparate instructions stored in different locations which, when joined logically together, comprise the module and achieve the stated purpose for the module.

A module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

As used herein, a plurality of items, structural elements, compositional elements, and/or materials may be presented in a common list for convenience. However, these lists should be construed as though each member of the list is individually identified as a separate and unique member. Thus, no individual member of such list should be construed as an equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as equivalents of one another, but are to be considered as separate and autonomous representations of the present invention.

Furthermore, the described features, structures, or characteristics may be combined in any suitable manner in one or more examples. In the following description, numerous specific details are provided, such as examples of search spaces, to provide a thorough understanding of embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation may be made without the exercise of inventive faculty.

While the methods of FIGs. 1, 2, 7 and 8 is illustrated to comprise a sequence of processes, the methods in some examples may perform illustrated processes in a different order.

## Claims

1. A method, comprising:
receiving, by a user equipment, UE (120), from an evolved NodeB, eNB (110), configuration information relating to restriction of one or more radio bearers (360) that are transmitted on only a subset of serving cells of the eNB (110) used in carrier aggregation of a long term evolution, LTE, LTE-advanced, LTE-A, or 5G wireless network, wherein the one
or more radio bearers (360) comprise voice, real time gaming, or signaling radio bearer and other bearers that have latency and/or reliability requirements;
performing, by the UE (120), logical channel prioritization based on the configuration information, the configuration information to comprise an information element ul-DataCellList to indicate indices of the subset of the serving cell where the one or more radio bearers (360) can be transmitted and/or received by the UE(120); and
transmitting, by the UE (120), the one or more radio bearers (360) to the eNB (110) on one or more serving cells in the subset in response to receiving the configuration information.

2. The method of claim 1, further comprising:
receiving, by the UE (120), an indication of a switching via one or more radio resource control, RRC, signals and/or medium access control, MAC, control element, CE, signals; and
switching, by the UE (120), transmission and/or reception of the one or more radio bearers (360) to or from a serving cell of the subset of serving cells based on the indication of the switching.

3. A user equipment, UE (120), comprising:
receive circuitry (216) configured to receive from an evolved node B, eNB (110), a configuration with restriction information on one or more radio bearers (360) that the one or more radio bearers (360) are transmitted on only a subset of serving cells of the eNB (110) used in carrier aggregation of a long term evolution, LTE, LTE-advanced, LTE-A, or 5G wireless network, wherein the one or more radio bearers (360) comprise voice, real time gaming, or signaling radio bearer and other bearers that have latency and/or reliability requirements;
a logical channel prioritization, LCP, module (125) configured to perform a restriction that the one or more radio bearers (360) are transmitted based on said configuration in response to performing logical channel prioritization, the configuration to comprise an information element ul-DataCellList to indicate indices of the subset of the serving cell where the one or more radio bearers (360) can be transmitted and/or received by the UE (120); and
transmit circuitry (212) configured to transmit the one or more radio bearers (360) to the said eNB (110) on one or more serving cells in the subset based on the configuration

4. The UE (120) of claim 3, further comprising:
control circuitry (214) configured to switch transmission/reception of the one or more radio bearers (360) to/from a serving cell of the subset of serving cellsbasedonRRC signaling or MAC CE signaling corresponding to said restriction information from the eNB (110); and
control circuitry (214) configured to switch transmission/reception of the one or more radio bearers (360) to/from a serving cell of the subset of serving cells, wherein the serving cell is the first serving cell, from which the receive circuitry (216) is configured to receive the RRC signaling.

5. A non-transitory machine-readable medium having instructions, stored thereon, that, when executed cause a user equipment, UE (120), to:
receive, from an evolved NodeB, eNB (110), configuration information relating to restriction of one or more radio bearers (360) that are transmitted on only a subset of serving cells of the eNB (110) used in carrier aggregation of a long term evolution, LTE, LTE-advanced, LTE-A, or 5G wireless network, wherein the one or more radio bearers (360) comprise voice, real time gaming, or signaling radio bearer and other bearers that have latency and/or reliability requirements;
perform logical channel prioritization based on the configuration information, the configuration information to comprise an information element ul-DataCellList to indicate indices of the subset of the serving cell where the one or more radio bearers (360) can be transmitted and/or received by the UE(120); and
transmit the one or more radio bearers (360) to the eNB (110) on one or more serving cells in the subset in response to receiving the configuration information.

## Patentansprüche

1. Verfahren, umfassend:
Empfangen, durch ein Benutzergerät, UE (120), von einem evolved NodeB, eNB (110), von Konfigurationsinformation in Bezug auf die Einschränkung eines oder mehrerer Funkträger (360), die nur auf einer Teilmenge von bedienenden Zellen des eNB (110) übertragen werden, die in der Trägeraggregation eines Long Term Evolution-, LTE-, LTE-Advanced-, LTE-A- oder 5G-Drahtlosnetzwerks verwendet werden, wobei der eine oder die mehreren Funkträger (360) Sprach-, Echtzeit-Gaming- oder Signalisierungs-Funkträger und andere Träger umfassen, die Latenz- und/oder Zuverlässigkeitsanforderungen aufweisen;
Durchführen, durch das UE (120), einer logischen Kanalpriorisierung basierend auf der Konfigurationsinformation, wobei die Konfigurationsinformation ein Informationselement ul-DataCellList umfasst, um Indizes der Teilmenge der bedienenden Zelle anzuzeigen, wo der eine oder die mehreren Funkträger (360) durch das UE (120) übertragen und/oder empfangen werden können; und
Übertragen, durch das UE (120), des einen oder der mehreren Funkträger (360) an den eNB (110) auf einer oder mehreren bedienenden Zellen in der Teilmenge als Reaktion auf das Empfangen der Konfigurationsinformation.

2. Verfahren nach Anspruch 1, ferner umfassend:
Empfangen, durch das UE (120), einer Anzeige eines Umschaltens über ein oder mehrere Funkressourcensteuerungs-, RRC-, Signale und/oder
Medienzugriffssteuerungs-, MAC-, Steuerelement-, CE-, Signale; und
Umschalten, durch das UE (120), einer Übertragung und/oder eines Empfangs des einen oder der mehreren Funkträger (360) zu oder von einer bedienenden Zelle der Teilmenge von bedienenden Zellen basierend auf der Anzeige des Umschaltens.

3. Benutzergerät, UE (120), umfassend:
eine Empfangsschaltung (216), die konfiguriert ist, um von einem evolved NodeB, eNB (110), eine Konfiguration mit Einschränkungsinformation über einen oder mehrere Funkträger (360) zu empfangen, dass der eine oder die mehreren Funkträger (360) nur auf einer Teilmenge von bedienenden Zellen des eNB (110) übertragen werden, die in der Trägeraggregation eines Long Term Evolution-, LTE-, LTE-Advanced-, LTE-A- oder 5G-Drahtlosnetzwerks verwendet werden, wobei der eine oder die mehreren Funkträger (360) Sprach-, Echtzeit-Gaming- oder Signalisierungs-Funkträger und
andere Träger umfassen, die Latenz- und/oder Zuverlässigkeitsanforderungen aufweisen;
ein logisches Kanalpriorisierungsmodul, LCP-Modul, (125), das konfiguriert ist, um eine Einschränkung durchzuführen, dass der eine oder die mehreren Funkträger (360) basierend auf der Konfiguration als Reaktion auf das Durchführen einer logischen Kanalpriorisierung übertragen werden, wobei die Konfiguration ein Informationselement ul-DataCellList umfasst, um Indizes der Teilmenge der bedienenden Zelle anzuzeigen, wo der eine oder die mehreren Funkträger (360) durch das UE (120) übertragen und/oder empfangen werden können; und
eine Übertragungsschaltung (212), die konfiguriert ist, um den einen oder die mehreren Funkträger (360) an den eNB (110) auf einer oder mehreren bedienenden Zellen in der Teilmenge basierend auf der Konfiguration zu übertragen.

4. UE (120) nach Anspruch 3, ferner umfassend:
eine Steuerschaltung (214), die konfiguriert ist, um eine Übertragung/einen Empfang des einen oder der mehreren Funkträger (360) zu/von einer bedienenden Zelle der Teilmenge von bedienenden Zellen basierend auf einer RRC-Signalisierung oder einer MAC-CE-Signalisierung entsprechend der Einschränkungsinformation von dem eNB (110) umzuschalten; und
eine Steuerschaltung (214), die konfiguriert ist, um eine Übertragung/einen Empfang des einen oder der mehreren Funkträger (360) zu/von einer bedienenden Zelle der Teilmenge von bedienenden Zellen umzuschalten, wobei die bedienende Zelle die erste bedienende Zelle ist, von der die Empfangsschaltung (216) konfiguriert ist, um die RRC-Signalisierung zu empfangen.

5. Nichtflüchtiges maschinenlesbares Medium mit darauf gespeicherten Anweisungen,
die, wenn sie ausgeführt werden, ein Benutzergerät, UE (120), zu Folgendem veranlassen:
Empfangen, von einem evolved NodeB, eNB (110), von Konfigurationsinformation in Bezug auf die Einschränkung eines oder mehrerer Funkträger (360), die nur auf einer Teilmenge von bedienenden Zellen des eNB (110) übertragen werden, die in der Trägeraggregation eines Long Term Evolution-, LTE-, LTE-Advanced-, LTE-A- oder 5G-Drahtlosnetzwerks verwendet werden, wobei der eine oder die mehreren Funkträger (360) Sprach-, Echtzeit-Gaming- oder Signalisierungs-Funkträger und andere Träger umfassen, die Latenz- und/oder Zuverlässigkeitsanforderungen aufweisen;
Durchführen einer logischen Kanalpriorisierung basierend auf der Konfigurationsinformation, wobei die Konfigurationsinformation ein Informationselement ul-DataCellList umfasst, um Indizes der Teilmenge der bedienenden Zelle anzuzeigen, wo der eine oder die mehreren Funkträger (360) durch das UE (120) übertragen und/oder empfangen werden können; und
Übertragen des einen oder der mehreren Funkträger (360) an den eNB (110) auf einer oder mehreren bedienenden Zellen in der Teilmenge als Reaktion auf das Empfangen der Konfigurationsinformation.

## Revendications

1. Un procédé comprenant :
la réception, par un équipement utilisateur, UE (120), à partir d'un noeud B évolué, eNB (110), d'une information de configuration concernant une restriction d'un ou plusieurs bearers radio (360) qui sont transmis seulement sur un sous-ensemble de cellules de desserte de l'eNB (110) utilisé dans une agrégation de porteuses d'un réseau sans fil Évolution à long terme, LTE, LTE évolué, LTE-A, ou 5G, dans lequel les un ou plusieurs bearers radio (360) comprennent un bearer radio de voix, de jeu en temps réel ou de signalisation et d'autres bearers qui ont des exigences de latence et/ou de fiabilité ;
la réalisation, par l'UE (120), d'une priorisation de canal logique sur la base de l'information de configuration, l'information de configuration étant destinée à comprendre un élément d'information ul-DataCellList pour indiquer des indices du sous-ensemble de la cellule de desserte où les un ou plusieurs bearers radio (360) peuvent être émis et/ou reçus par l'UE (120) ; et
la transmission, par l'UE (120), des un ou plusieurs bearers radio (360) à l'eNB (110) sur une ou plusieurs cellules de desserte du sous-ensemble en réponse à la réception de l'information de configuration.

2. Le procédé selon la revendication 1, comprenant en outre :
la réception, par l'UE (120), d'une indication d'une commutation via un ou plusieurs signaux de contrôle de ressource radio, RRC, et/ou des signaux d'élément de contrôle, CE, de contrôle d'accès au support, MAC ; et
la commutation, par l'UE (120), de l'émission et/ou de la réception des un ou plusieurs bearers radio (360) vers ou depuis une cellule de desserte du sous-ensemble de cellules de desserte sur la base de l'indication de la commutation.

3. Un équipement utilisateur, UE (120), comprenant :
une circuiterie de réception (216) configurée pour recevoir, à partir d'un noeud B évolué, eNB (110), une configuration avec une information de restriction sur un ou plusieurs bearers radio (360) que les un ou plusieurs bearers radio (360) sont transmis seulement sur un sous-ensemble de cellules de desserte de l'eNB (110) utilisé dans une agrégation de porteuses d'un réseau sans fil Évolution à long terme, LTE, LTE évolué, LTE-A, ou 5G, dans lequel les un ou plusieurs bearers radio (360) comprennent un bearer radio de voix, de jeu en temps réel ou de signalisation et d'autres bearers qui ont des exigences de latence et/ou de fiabilité ;
un module de priorisation de canal logique, LCP, (125) configuré pour réaliser une restriction que les un ou plusieurs bearers radio (360) soient transmis sur la base de ladite configuration en réponse à la réalisation d'une priorisation de canal logique, la configuration étant destinée à comprendre un élément d'information ul-DataCellList pour indiquer des indices du sous-ensemble de la cellule de desserte où les un ou plusieurs bearers radio (360) peuvent être émis et/ou reçus par l'UE (120) ; et
une circuiterie de transmission (212) configurée pour transmettre les un ou plusieurs bearers radio (360) audit eNB (110) sur une ou plusieurs cellules de desserte du sous-ensemble sur la base de la configuration.

4. L'UE (120) selon la revendication 3, comprenant en outre :
une circuiterie de contrôle (214) configurée pour commuter une émission/réception des un ou plusieurs bearers radio (360) vers/depuis une cellule de desserte du sous-ensemble de cellules de desserte sur la base d'une signalisation RRC ou d'une signalisation CE MAC correspondant à ladite information de restriction provenant de l'eNB (110) ; et
une circuiterie de contrôle (214) configurée pour commuter l'émission/réception des un ou plusieurs bearers radio (360) vers/depuis une cellule de desserte du sous-ensemble de cellules de desserte, dans lequel la cellule de desserte est la première cellule de desserte à partir de laquelle la circuiterie de réception (216) est configurée pour recevoir la signalisation RRC.

5. Un support non transitoire lisible par machine avec des instructions stockées dessus qui, quand elles sont exécutées, amènent un équipement utilisateur, UE (120), à :
recevoir, à partir d'un noeud B évolué, eNB (110), une information de configuration concernant une restriction d'un ou plusieurs bearers radio (360) qui sont transmis seulement sur un sous-ensemble de cellules de desserte de l'eNB (110) utilisé dans une agrégation de porteuses d'un réseau sans fil Évolution à long terme, LTE, LTE évolué, LTE-A, ou 5G, dans lequel les un ou plusieurs bearers radio (360) comprennent un bearer radio de voix, de jeu en temps réel ou de signalisation et d'autres bearers qui ont des exigences de latence et/ou de fiabilité ;
réaliser une priorisation de canal logique sur la base de l'information de configuration, l'information de configuration étant destinée à comprendre un élément d'information ul-DataCellList pour indiquer des indices du sous-ensemble de la cellule de desserte où les un ou plusieurs bearers radio (360) peuvent être émis et/ou reçus par l'UE (120) ; et
transmettre les un ou plusieurs bearers radio (360) à l'eNB (110) sur une ou plusieurs cellules de desserte du sous-ensemble en réponse à la réception de l'information de configuration.
